# EUROPÄISCHE PATENTANMELDUNG

(11) **EP 2 080 737 A2**
(43) Veröffentlichungstag der Anmeldung: **22.07.2009**
(21) Anmeldenummer: 08172970.9
(22) Anmeldetag: 29.12.2008
(51) Int. Cl.: C01B 33/12, H01H 85/18

(54) **Verfahren zum Behandeln und Verfestigen von Quarzsand durch Aktivieren, verfestigter Quarzsandkörper sowie Überstrom-Schutzeinrichtungen**

(30) Priorität: 17.01.2008 DE 102008004873
(71) Anmelder: Siemens Aktiengesellschaft, 80333 München (DE)
(72) Erfinder: Domanits, Peter, 92266 Ensdorf (DE); Irrgang, Stephan, 93138 Lappersdorf (DE); Obergrusberger, Richard, 93152 Nittendorf-Thumhausen (DE); Schmid, Adolf, 93164 Laaber (DE)

(57) **Zusammenfassung**

Die vorliegende Erfindung betrifft ein Verfahren zum Behandeln und Verfestigen von Quarzsand, welches durch folgende Schritte gekennzeichnet ist:
a) Behandeln der Oberfläche des Quarzsandes durch Hinzufügen von zumindest einer Substanz, beispielsweise einer Säure oder einer Lauge;
b) Entfernen der zumindest einen Substanz, beispielsweise einer Säure oder einer Lauge, aus dem Quarzsand durch Waschen des Quarzsandes mittels einer wasserhaltigen Lösung oder durch Ausheizen;
c) Verfestigen des gereinigten Quarzsandes durch Hinzufügen eines Bindemittels.

Ferner betrifft die Erfindung einen verfestigten Quarzsand für eine Überstrom-Schutzeinrichtung sowie eine Überstrom-Schutzeinrichtung.

## Beschreibung

Die vorliegende Erfindung betrifft ein Verfahren zum Behandeln und Verfestigen von Quarzsand. Ferner betrifft die Erfindung einen verfestigten Quarzsandkörper sowie eine Überstrom-Schutzeinrichtung.

Leiter die von einem elektrischen Strom durchflossen werden erwärmen sich. Bei unzulässig großen Strömen kann es zu einer unzulässig großen Erwärmung des Leiters und damit zu einem Abschmelzen der Isolation bis hin zu einem Kabelbrand kommen. Um der Brandgefahr vorzubeugen, muss bei Auftritt eines zu hohen Stromes, d.h. eines Überstromes, dieser rechtzeitig abgeschaltet werden. Mit sogenannten Überstrom-Schutzeinrichtungen ist das gewährleistet. Überstrom-Schutzeinrichtungen sind beispielsweise Schmelzsicherungen, bei denen ein Schmelzleiter mit kleinem Querschnitt sich in der Sicherung befindet, der bei Auftreten eines Überstromes schmilzt und dadurch den Stromkreis unterbricht.

Derartige Überstrom-Schutzeinrichtungen weisen häufig Quarzsand als Löschungs- und Kühlungsmittel auf, der den Schmelzleiter umgibt. Es ist bekannt, dass dieser Quarzsand, der in Überstrom-Schutzeinrichtungen, wie Halbleiterschutzsicherungen bzw. in Schmelzsicherungen, zum Einsatz kommt, zu einem "Sandkörper" verfestigt wird. Dies erfolgt mittels eines Bindemittels, wie beispielsweise Wasserglas, Kieselsol, Kieselsäureester oder Kieselsäure.

Der Quarzsand in einer Überstrom-Schutzeinrichtung hat mehrere Funktionen. Zum einen dient der Quarzsand zur Kühlung des Schmelzleiters, der durch den ihn durchfließenden Strom erwärmt wird und schmilzt, wenn der Bemessungsstrom der Überstrom-Schutzeinrichtung deutlich überschritten wird. Zum anderen soll der Quarzsand einen Lichtbogen löschen, der beim Unterbrechen eines definierten Überstromes entsteht.

Fließt ein Überstrom lange genug durch den Schmelzleiter der Überstrom-Schutzeinrichtung wird dieser zerstört und die Überstrom-Schutzeinrichtung ist danach nicht mehr erneut einsetzbar. Der Schmelzleiter, der vorzugweise aus Elektrolytkupfer oder Feinsilber hergestellt ist, wird direkt von dem Quarzsand umgeben. Der Quarzsand ist erforderlich, um den Lichtbogen zu löschen, der beim Unterbrechen eines definierten Überstromes entsteht. Der Schmelzleiter durchläuft während seiner Sicherungsfunktion die drei Aggregatzustände "fest", "flüssig" und "gasförmig". Im letzten Zustand des Schmelzleiters, dem gasförmigen Zustand, erfolgt die Stromführung über den entstandenen Lichtbogen. Durch Schmelzen des umgebenden Quarzsandes wird soviel Energie verbraucht, dass der Lichtbogen stark abkühlt und erlischt. Die zu schützende Leitung ist damit von der versorgenden Stromquelle getrennt. Die korrekte Funktion der Lichtbogenlöschung ist im Wesentlichen abhängig von der Körnung, der Reinheit, der Menge, der Packungsdichte sowie der chemischen und physikalischen Verfestigung des verwendeten Quarzsandes.

Quarzsand bezeichnet einen Sandtyp, der zum größten Teil aus Quarzkörnern besteht. Quarz ist ein Mineral mit der chemischen Zusammensetzung SiO₂. Durch die Zugabe eines Bindemittels, wie beispielsweise Wasserglas, Kieselsol, Kieselsäureester oder Kieselsäure, zu dem Quarzsand wird dieser verfestigt. Das Bindemittel weist Stoffe auf, die ätzend auf die Oberfläche des Quarzsandes bzw. der Quarzsandpartikel einwirken, wodurch sich das Bindemittel besser mit dem Quarzsand verbinden kann.

Nachteilig bei dem bekannten, mit den oben genannten Bindemitteln verfestigten Quarzsand ist, dass relativ viel Bindemittel benötigt wird, um eine gute Verfestigung zu erlangen. Ferner ist die Druckfestigkeit derartig verfestigter Quarzsandsandkörper nicht immer ausreichend hoch, so dass das Abschaltverhalten bei Überstrom-Schutzeinrichtungen, in denen der verfestigte Quarzsand verwendet wird, nicht immer ausreichend ist. Des Weiteren kann in dem verfestigten Quarzsandkörper der Anteil der anwesenden bzw. entstehenden Ionen zu hoch sein. Die OH⁻-Ionen wirken ätzend auf die Quarzsandpartikel.

Die Aufgabe der Erfindung besteht darin, ein Verfahren zur Verfestigung von Quarzsand bereitzustellen, wodurch eine besonders hohe Druckfestigkeit des Quarzsandkörpers erlangt werden kann. Die hohe Druckfestigkeit des Quarzsandkörpers soll mit möglichst wenig Zugabe von Bindemittel erreicht werden, um die Kosten zur Verfestigung des Quarzsandes gering zu halten. Ferner soll ein verfestigter Quarzsandkörper geschaffen werden, der das Abschaltverhalten von Überstrom-Schutzeinrichtungen verbessert, sowie eine Überstrom-Schutzeinrichtung, die ein gutes Abschaltverhalten aufweist.

Diese Aufgaben werden erfindungsgemäß durch ein Verfahren zur Verfestigung von Quarzsand mit den Merkmalen gemäß dem unabhängigen Patentanspruch 1, durch einen verfestigten Quarzsandkörper für eine Überstrom-Schutzeinrichtung mit den Merkmalen gemäß dem unabhängigen Patentanspruch 6 sowie durch eine Überstrom-Schutzeinrichtung mit den Merkmalen gemäß dem unabhängigen Patentanspruch 7 gelöst. Weitere Merkmale und Details der Erfindung ergeben sich aus den Unteransprüchen sowie der Beschreibung. Merkmale und Details die im Zusammenhang mit dem Verfahren zur Verfestigung von Quarzsand beschrieben sind gelten dabei selbstverständlich auch im Zusammenhang mit dem verfestigten Quarzsandkörper für eine Überstrom-Schutzeinrichtung und der Überstrom-Schutzeinrichtung, und jeweils umgekehrt.

Gemäß des ersten Aspektes der Erfindung wird die Aufgabe durch ein Verfahren zum Verfestigen von Quarzsand gelöst, wobei das Verfahren durch folgende Schritte gekennzeichnet ist:
a) Behandeln der Oberfläche des Quarzsandes durch Hinzufügen von zumindest einer Substanz;
b) Entfernen der zumindest einen Substanz aus dem behandelten Quarzsand durch Waschen des Quarzsandes mittels einer wasserhaltigen Lösung oder durch Ausheizen;
c) Verfestigen des gereinigten Quarzsandes durch Hinzufügen eines Bindemittels.

In einem ersten Schritt wird die Oberfläche des Quarzsandes durch Hinzufügen von zumindest einer Substanz, beispielsweise einer Säure oder einer Lauge behandelt. Prinzipiell können alle Substanzen, beispielweise Laugen und Säuren verwendet werden, die ätzend auf die Oberfläche des Quarzsandes bzw. der Quarzsandpartikel wirken oder diese anlösen und dadurch die Oberfläche des Quarzsandes aufrauen und vergrößern, bzw. eine bessere Verbindung zwischen den Sandpartikeln herbeiführen. Durch die Behandlung mit derartigen Substanzen wird der Quarzsand "aktiviert". Aktivieren des Quarzsandes bedeutet im Sinne der Erfindung, dass die Oberfläche der Sandkörner für eine gute Verfestigung chemisch aufbereitet wird. Hierdurch wird die Oberflächenstruktur der Sandkörner des Quarzsandes verändert und die Summe der Oberflächen aller Sandkörner vergrößert. Dies ermöglicht, dass die Sandkörner des Quarzsandes eine bessere Verbindung mit einem Bindemittel, d.h. beispielsweise Wasserglas, Kieselsol, Kieselsäureester oder Kieselsäure, eingehen können, wodurch die Festigkeit, d.h. die Druckfestigkeit, des Quarzsandkörpers erhöht wird.

In einem zweiten Verfahrensschritt wird die zumindest eine Substanz aus dem Quarzsand durch Waschen mittels einer wasserhaltigen Lösung oder durch Ausheizen entfernt. Beispielsweise wird durch das Waschen des Quarzsandes mittels einer wasserhaltigen Lösung die ätzend wirkende Lauge bzw. die ätzend wirkende Säure entfernt. Dies hat den Vorteil, dass diese ätzenden Mittel den später verfestigten Quarzsand nicht mehr unerwünscht beeinflussen können. Ferner wird die elektrische Leitfähigkeit des Quarzsandes durch das Herauslösen der zumindest einen Substanzen verringert. Der Quarzsand soll eine möglichst geringe elektrische Leitfähigkeit bzw. keine elektrische Leitfähigkeit aufweisen, damit er keinen Strom weiterleiten kann.

In dem dritten Verfahrensschritt wird der gereinigte Quarzsand durch Hinzufügen eines Bindemittels verfestigt. Als Bindemittel kann beispielsweise Wasserglas, Kieselsol, Kieselsäureester oder Kieselsäure vorgesehen werden. Der Vorteil dieses Verfahrens zu den bekannten Verfahren zur Verfestigung von Quarzsand ist, dass weniger Bindemittel verwendet werden kann, wodurch die Kosten geringer gehalten werden können. Ferner verfügt ein derartig behandelter Quarzsandkörper trotz der geringeren hinzugefügten Mengen an Bindemittel über eine höhere Druckfestigkeit, als Quarzsandkörper, bei denen die Oberfläche des Quarzsandes vor dem Verfestigungsprozess nicht aktiviert worden ist. Ein derartig behandelter Quarzsandkörper verbessert das Abschaltverhalten von Überstrom-Schutzeinrichtungen, wenn dieser als Isolier- bzw. Kühlkörper um den Schmelzleiter angeordnet wird. Auch das Kühlverhalten des Quarzsandkörpers kann durch das Verfahren zur Verfestigung des Quarzsandes verbessert werden. Ein derartig verfestigter Quarzsandkörper kann mehr Wärmeenergie ableiten, als ein bisher bekannter verfestigter Quarzsandkörper. Dadurch kann die Kühlung des Schmelzleiters besser durchgeführt werden.

Durch das Verfahren zur Verfestigung des Quarzsandes wird ein verfestigter Quarzsandkörper geschaffen, der Sandkörner mit größerer Oberfläche aufweist, der sehr rein ist, der eine hohe Packungsdichte und eine hohe chemische und physikalische Festigkeit aufweist.

Insbesondere bevorzugt ist es, wenn zum Behandeln der Oberfläche des Quarzsandes eine Alkalilauge oder Säure verwendet wird. Alkalilaugen sind stark alkalische, wässrige Lösungen der Alkalimetallhydroxide. Die Alkalimetallhydroxide sind starke Basen und sehr leicht in Wasser löslich. Besonders bevorzugt wird die Oberfläche des Quarzsandes durch eine Natronlauge, welche die wässrige Lösung von Natriumhydroxid (Na-OH) darstellt, oder durch eine Kalilauge, welche die wässrige Lösung von Kaliumhydroxid (KOH) darstellt, behandelt. D.h., Natronlauge ist die Bezeichnung für Lösungen von Natriumhydroxid (NaOH) in Wasser. Kalilauge ist die Bezeichnung für Lösungen von Kaliumhydroxid (KOH) in Wasser. Der Quarzsand ist nicht beständig gegenüber diesen Laugen, so dass die Oberfläche des Quarzsandes "aktiviert" wird. Kalilauge und Natronlauge ätzen die Oberfläche der Quarzsandpartikel auf, wodurch die Oberflächenstruktur der Sandkörner verändert wird. Da diese Laugen eine elektrische Leitfähigkeit aufweisen, werden sie nach dem Aufbereiten der Oberfläche der Quarzsandpartikel durch eine wasserhaltige Lösung aus dem Quarzsand gewaschen. Erst danach wird das Bindemittel zur Verfestigung des Quarzsandes hinzugefügt.

Ferner eignen sich Säuren, beispielsweise Flusssäure sehr gut zum Behandeln der Oberfläche des Quarzsandes bzw. der Quarzsandpartikel. Bei der Flusssäure, auch als Fluorwasserstoffsäure bezeichnet, handelt es sich um eine starke anorganische Säure. Flusssäure ist die wässrige Lösung von Fluorwasserstoff (HF). Sie kann silikatische Werkstoffe wie Quarz lösen und die Oberflächen aufrauen. Die ätzende Wirkung beruht auf folgender Reaktion: Aus Quarzsand, d.h. Siliciumdioxid, entsteht bei der Einwirkung von Flusssäure ein Gas, das mit Wasser sofort hydrolysiert, die Flusssäure zurückbildet und gleichzeitig amorphes Kieselsäuregel abscheidet. Flusssäure ist eine Säure, die Quarz unter Bildung von Siliciumtetrafluorid beziehungsweise Hexafluorokieselsäure aufzulösen vermag. Nach dem Behandeln der Oberfläche der Quarzsandpartikel wird die Flusssäure entfernt, beispielsweise mittels der wasserhaltigen Lösung ausgewaschen. Anschließend kann der gereinigte Quarzsand durch Zugabe von Bindemittel verfestigt werden.

Es wurde festgestellt, dass Quarzsandkörper, deren Quarzsand in einem ersten Schritt mit einer Säure, beispielsweise Flusssäure oder einer Lauge, beispielsweise Natronlauge bzw. Kalilauge behandelt wird, die Säure oder Lauge dann durch eine wasserhaltige Lösung aus dem Quarzsand ausgewaschen wird und anschließend der Quarzsand durch Zugabe eines Bindemittels verfestigt wird, besonders druckfest sind. Es wurde ferner festgestellt, dass eine hohe Druckfestigkeit des Quarzsandkörpers bereits bei Zugabe von relativ wenig Bindemittel erreicht wird. Hierdurch können Kosten eingespart werden. Durch die geringe notwendige Zugabe eines Bindemittels, wie beispielsweise Wasserglas, Kieselsol, Kieselsäureester oder Kieselsäure, wird ferner erreicht, dass die elektrische Leitfähigkeit des Quarzsandes gering gehalten wird. Ein derart verfestigter Quarzsandkörper weist ferner ein sehr gutes Kühlverhalten auf, da der Quarzsand eine hohe Packungsdichte aufweist.

Als wasserhaltige Lösung kann beispielsweise destilliertes Wasser verwendet werden. Besonders bevorzugt ist jedoch ein derartiges Verfahren, bei dem die Entfernung der zumindest einen Säure oder der zumindest einen Lauge aus dem Quarzsand durch entionisiertes Wasser erfolgt. Durch das Entfernen des Aktivierungsmittels, d.h. der Lauge oder der Säure, aus dem Quarzsand, beispielsweise durch Auswaschen mittels entionisierten Wassers wird erreicht, dass der Quarzsand anschließend keine bzw. nur eine sehr geringe elektrische Leitfähigkeit aufweist.

Zur Verfestigung des gereinigten bzw. gewaschenen Quarzsandes können verschiedenste Bindemittel verwendet werden. Besonders geeignet zur Verfestigung ist die Zugabe von Wasserglas, Kieselsol, Kieselsäureester oder Kieselsäure etc..
Wassergläser sind wasserlösliche Alkalisilikate. Es sind amorphe, nicht-kristalline Verbindungen, wie Natrium- und Kaliumsilikate. Dadurch, dass zur Verfestigung des Quarzsandes nur wenig Bindemittel verwendet werden muss, wird die Anzahl der Ionen in dem verfestigten Quarzsandkörper gering gehalten. Zur Behandlung der Oberfläche der Quarzsandpartikel sind diese Ionen erwünscht. Bei dem verfestigten Quarzsandkörper soll jedoch der ionische Bestandteil so gering wie möglich sein.
Kieselsol weist von sich aus weniger ionische Bestandteile auf als Wassergläser, so dass Kieselsol ebenfalls sehr gut als Bindemittel geeignet ist. Kieselsol ist eine wässrige kolloiddisperse Lösung von amorphem Siliciumdioxid (SiO₂). Ferner eignen sich auch Kieselsäuren als Bindemittel. Die Säuren von Siliciumdioxid werden als Kieselsäuren bezeichnet. Auch Orthokieselsäure H₄SiO₄ oder Metakielselsäure H₂SiO₃ können verwendet werden. Beide sind sehr schwache Säuren.

Ferner ist ein Verfahren bevorzugt, bei dem nach dem Entfernen der zumindest einen Säure oder der zumindest einen Lauge aus dem Quarzsand durch Waschen des säurehaltigen oder laugehaltigen Quarzsandes mittels der wasserhaltigen Lösung der Quarzsand getrocknet wird. Hierdurch bleiben keine Rückstände der wasserhaltigen Lösung im Quarzsand übrig. So kann der gewaschene Quarzsand besonders gut eine Verbindung mit dem Bindemittel eingehen, wodurch eine sehr hohe Verfestigung des Quarzsandes bzw. eine hohe Druckfestigkeit des Quarzsandkörpers erhalten wird.

Gemäß des zweiten Aspektes der Erfindung wird die Aufgabe durch einen verfestigten Quarzsandkörper für eine Überstrom-Schutzeinrichtung gelöst, wobei der Quarzsandkörper nach einem Verfahren gemäß des ersten Aspektes der Erfindung verfestigt ist. Ein derartig verfestigter Quarzsandkörper weist ein sehr gutes Kühlverhalten auf, d.h. kann viel Wärmeenergie aufnehmen bzw. ableiten. Ferner kann ein derartig verfestigter Quarzsand das Abschaltverhalten von Überstrom-Schutzeinrichtungen deutlich verbessern, da die elektrische Leitfähigkeit des verfestigten Quarzsandkörpers durch die Zugabe von nur wenig Bindemittel gering gehalten werden kann.

Die Aufgabe wird gemäß des dritten Aspektes der Erfindung durch eine Überstrom-Schutzeinrichtung aufweisend ein Gehäuse, zwei durch einen Schmelzleiter verbundene Kontakte sowie ein aus Quarzsand gebildetes Löschungs- und Kühlungsmittel, welches den Schmelzleiter umgibt, gelöst, wobei der Quarzsand nach einem Verfahren gemäß des ersten Aspektes der Erfindung verfestigt ist. Die Verwendung eines derartig verfestigen Quarzsandkörpers als Isolier- und Kühlkörper in einer Überstrom-Schutzeinrichtung, d.h. in einer Schmelzsicherung, gewährleistet ein hohes Abschaltverhalten der Überstrom-Schutzeinrichtung. Der durch das Verfahren gemäß dem ersten Aspekt der Erfindung hergestellte Quarzsandkörper eignet sich besonders gut als Isolier- und Kühlkörper in einer Schmelzsicherung, da dieser verfestigte Quarzsandkörper sehr gut Wärmeenergie aufnehmen bzw. ableiten kann. Der Quarzsandkörper entzieht einem entstehenden Lichtbogen sehr effektiv die Energie. Ferner verhindert ein derart verfestigter Quarzsandkörper aufgrund seiner hohen Druckfestigkeit, dass die Schmelzsicherung explodiert. Eine derartige Schmelzsicherung erfüllt ihre Funktion auch bei sehr hohen Überströmen.

Das "Aktivieren" des Quarzsandes erhöht die Druckfestigkeit des Sandkörpers. Dies hat folgende Vorteile:
- eine höhere Festigkeit des Sandkörpers;
- beim Abschalten der Schmelzsicherung entsteht eine höhere Bogenspannung, was sich positiv auf das Abschaltverhalten der Schmelzsicherung auswirkt;
- eine Verringerung der I²t-Werte, wobei der I²t-Wert das Integral des Stromquadrates über ein gegebenes Zeitintervall ist. Der I²t-Wert ist ein charakteristischer Wert für das Ausschaltvermögen von Schmelzsicherungen;
- es ist weniger Bindemittel notwendig, als bei bekannten verfestigten Quarzsanden, was zu einer Kosteneinsparung führt.

## Patentansprüche

1. Verfahren zum Behandeln und Verfestigen von Quarzsand, **gekennzeichnet durch** folgende Schritte:
a) Behandeln der Oberfläche des Quarzsandes **durch** Hinzufügen von zumindest einer Substanz;
b) Entfernen der zumindest einen Substanz aus dem Quarzsand **durch** Waschen des Quarzsandes mittels einer wasserhaltigen Lösung oder **durch** Ausheizen;
c) Verfestigen des gereinigten Quarzsandes **durch** Hinzufügen eines Bindemittels.

2. Verfahren nach Anspruch 1, **dadurch gekennzeichnet, dass** zum Behandeln der Oberfläche des Quarzsandes als Substanz eine Lauge oder eine Säure verwendet wird.

3. Verfahren nach Anspruch 2, **dadurch gekennzeichnet, dass** eine Alkalilauge oder Flusssäure verwendet wird.

4. Verfahren nach einem der Ansprüche 1 bis 3, **dadurch gekennzeichnet, dass** die Entfernung der zumindest einen Substanz aus dem Quarzsand durch entionisiertes Wasser als Lösungsmittel oder eine Lösung mit entionisiertem Wasser erfolgt.

5. Verfahren nach einem der Ansprüche 1 bis 4, **dadurch gekennzeichnet, dass** zur Verfestigung des gereinigten Quarzsandes ein Bindemittel hinzugefügt wird.

6. Verfahren nach Anspruch 5, **dadurch gekennzeichnet, dass** als Bindemittel Wasserglas, Kieselsol, Kieselsäureester oder Kieselsäure hinzugefügt wird.

7. Verfahren nach einem der Ansprüche 1 bis 6, **dadurch gekennzeichnet, dass** nach dem Entfernen der zumindest einen Säure oder der zumindest einen Lauge aus dem Quarzsand durch Waschen des säurehaltigen oder laugehaltigen Quarzsandes mittels einer wasserhaltigen Lösung der Quarzsand getrocknet wird.

8. Verfestigter Quarzsandkörper für eine Überstrom-Schutzeinrichtung, **dadurch kennzeichnet, dass** der Quarzsand nach einem Verfahren gemäß einem der vorherigen Ansprüche 1 bis 7 behandelt und verfestigt ist.

9. Überstrom-Schutzeinrichtung aufweisend ein Gehäuse, zwei durch einen Schmelzleiter verbundene Kontakte sowie ein aus Quarzsand gebildetes Löschungs- und Kühlungsmittel, welches den Schmelzleiter umgibt, **dadurch gekennzeichnet, dass** der Quarzsand nach einem Verfahren gemäß einer der vorherigen Ansprüche 1 bis 7 behandelt und verfestigt ist.
